# EUROPEAN PATENT APPLICATION

(11) **EP 4 530 161 A1**
(43) Date of publication of application: **02.04.2025**
(21) Application number: 24202153.3
(22) Date of filing: 24.09.2024
(51) Int. Cl.: B62D 6/00

(54) **STEERING CONTROL DEVICE AND STEERING CONTROL METHOD**

(30) Priority: 27.09.2023 JP 2023165860
(71) Applicant: JTEKT CORPORATION, Kariya-shi, Aichi-ken, 448-8652 (JP)
(72) Inventor: HOSONO, Hiroshi, Kariya-shi, Aichi-ken, 448-8652 (JP); TAMAIZUMI, Terutaka, Kariya-shi, Aichi-ken, 448-8652 (JP); INDEN, Yuki, Kariya-shi, Aichi-ken, 448-8652 (JP); TAKAHASHI, Saki, Toyota-shi, Aichi-ken, 471-8571 (JP)
(74) Representative: Winter, Brandl - Partnerschaft mbB

(57) **Abstract**

A vehicle steering system (2) has a power transmission path cut off between a steering unit (4) that is steered by a steering wheel (3) of a vehicle and a turning unit (6) that operates to turn a turning wheel (5) of the vehicle. A steering control device (1) for the vehicle steering system (2) includes a processor (60) that controls operation of the turning unit (6). The processor (60) executes a target turning angle calculation process of, based on a steering angle representing a rotation position of the steering wheel (3), calculating a target turning angle that is a target of a turning angle representing a turning position of the turning wheel (5) and is a control amount for operating the turning unit (6).

## Description

### BACKGROUND OF THE INVENTION

### 1. Field of the Invention

This disclosure relates to a steering control device and a steering control method.

### 2. Description of Related Art

There is a steer-by-wire steering device that is installed in a vehicle. Such a steer-by-wire steering device has an advantage in that a relationship between a steering angle representing a rotation position of a steering wheel and a turning angle representing a turning position of turning wheels can be freely changed. However, freely changing the relationship between the steering angle and the turning angle has an influence on a response characteristic of a yaw rate that is behavior of the vehicle. As a technology that can cope with such an influence, for example, the steering control device described in Japanese Unexamined Patent Application Publication No. 2023-12120 (JP 2023-12120 A) has been proposed.

In the aforementioned JP 2023-12120 A, to cope with the influence of freely changing the relationship between the steering angle and the turning angle on responsiveness of the yaw rate that is behavior of a vehicle, phase compensation is performed. Such phase compensation compensates for a component that acts so as to freely change the relationship between the steering angle and the turning angle.

Incidentally, it is considered that the influence of freely changing the relationship between the steering angle and the turning angle is not limited to the influence on the responsiveness of the yaw rate that is behavior of the vehicle, and that control stability is also affected. Therefore, in the case where the relationship between the steering angle and the turning angle is freely changed, it is desirable to mitigate a decrease in control stability.

### SUMMARY OF THE INVENTION

One aspect of implementation of this disclosure is a steering control device for a vehicle steering system having a power transmission path cut off between a steering unit that is steered by a steering wheel of a vehicle and a turning unit that operates to turn a turning wheel of the vehicle. The steering control device includes a processor configured to control operation of the turning unit. The processor is configured to execute a target turning angle calculation process of, based on a steering angle representing a rotation position of the steering wheel, calculating a target turning angle that is a target of a turning angle representing a turning position of the turning wheel and is a control amount for operating the turning unit. The target turning angle calculation process includes: a conversion calculation process of, to change a relationship between the steering angle and the turning angle, receiving an input of the steering angle and with that calculating a conversion component that is obtained by converting the steering angle; a compensation calculation process of, to adjust an influence on behavior of the vehicle, receiving an input of the conversion component and with that calculating a compensated component that is obtained by performing phase compensation on the conversion component; and a component reflection process of calculating the target turning angle so as to reflect the compensated component. The conversion calculation process includes calculating the conversion component according to a conversion characteristic that specifies a relationship between the steering angle and the conversion component. The compensation calculation process includes calculating the compensated component according to a compensation characteristic that specifies a relationship between the conversion component and the compensated component. At least a first process between the conversion calculation process and the compensation calculation process includes a characteristic changing process of changing a characteristic in the first process based on a characteristic of a second process between the conversion calculation process and the compensation calculation process so as to secure control stability of the vehicle steering system.

According to this configuration, the characteristic changing process changes the characteristic in the corresponding process based on the characteristic of the other process. Thus, in the conversion calculation process and the compensation calculation process, the characteristics of these processes can be linked to each other from the viewpoint of securing control stability of the vehicle steering system. That is, also in the case where the relationship between the steering angle and the turning angle is changed, the control stability of the vehicle steering system can be secured. Therefore, a decrease in the control stability can be mitigated.

Of the conversion calculation process and the compensation calculation process, the compensation calculation process may include the characteristic changing process. The characteristic changing process in the compensation calculation process may change the compensation characteristic based on the conversion characteristic.

According to this configuration, in the case where the conversion component obtained by changing the steering angle is further subjected to phase compensation, the compensation characteristic in the compensation calculation process is changed so as to mitigate a decrease in the control stability of the vehicle steering system. Thus, a decrease in the control stability can be mitigated by simply including the characteristic changing process in the compensation calculation process.

The conversion calculation process may convert the steering angle into the conversion component using a steered angle variable value that indicates a ratio of a change amount of the turning angle relative to a change amount of the steering angle. The conversion characteristic may be based on the steered angle variable value according to a state change of at least either the vehicle or the vehicle steering system. The compensation calculation process may be a phase-lag filtering process of executing phase-lag compensation on the conversion component. The compensation characteristic may indicate a constant of a transfer function that is a characteristic of the phase-lag filtering process.

According to this configuration, also in the case where the steered angle variable value changes according to the state change of at least either the vehicle or the vehicle steering system, the control stability of the vehicle steering system can be secured regardless of that state change.

Of the conversion calculation process and the compensation calculation process, the conversion calculation process may include the characteristic changing process. The characteristic changing process in the conversion calculation process may change the conversion characteristic based on the compensation characteristic.

According to this configuration, in the case where the compensation characteristic in the compensation calculation process changes depending on traveling of the vehicle, the conversion characteristic in the conversion calculation process is changed so as to mitigate a decrease in the control stability of the vehicle steering system. Thus, a decrease in the control stability can be mitigated by simply including the characteristic changing process in the conversion calculation process.

The compensation calculation process may be a phase-lag filtering process of executing phase-lag compensation on the conversion component. The compensation characteristic may indicate a constant of a transfer function that is a characteristic of the phase-lag filtering process according to a state change of at least either the vehicle or the vehicle steering system. The conversion calculation process may convert the steering angle into the conversion component using a steered angle variable value that indicates a ratio of a change amount of the turning angle relative to a change amount of the steering angle. The conversion characteristic may be based on the steered angle variable value.

According to this configuration, also in the case where the constant of the transfer function changes according to the state change of at least either the vehicle or the vehicle steering system, the control stability of the vehicle steering system can be secured regardless of that state change.

The conversion calculation process may include a steered angle variable value calculation process of calculating the steered angle variable value using the steering angle as an input. A characteristic based on the steered angle variable value may be a change amount of the conversion component or a change amount of the steered angle variable value relative to a change amount of the steering angle that is input into the steered angle variable value calculation process.

According to this configuration, adjustment of a gradient of change that is obtained in association with the steered angle variable value becomes possible. This is effective for securing the control stability of the vehicle steering system.

Another aspect of this disclosure is a steering control method for a vehicle steering system having a power transmission path cut off between a steering unit that is steered by a steering wheel of a vehicle and a turning unit that operates to turn a turning wheel of the vehicle. The steering control method includes executing a control process of controlling operation of the turning unit. The control process includes a target turning angle calculation process of, based on a steering angle representing a rotation position of the steering wheel, calculating a target turning angle that is a target of a turning angle representing a turning position of the turning wheel and is a control amount for operating the turning unit. The target turning angle calculation process includes: a conversion calculation process of, to change a relationship between the steering angle and the turning angle, receiving an input of the steering angle and with that calculating a conversion component that is obtained by converting the steering angle; a compensation calculation process of, to adjust an influence on behavior of the vehicle, receiving an input of the conversion component and with that calculating a compensated component that is obtained by performing phase compensation on the conversion component; and a component reflection process of calculating the target turning angle so as to reflect the compensated component. The conversion calculation process includes calculating the conversion component according to a conversion characteristic that specifies a relationship between the steering angle and the conversion component. The compensation calculation process includes calculating the compensated component according to a compensation characteristic that specifies a relationship between the conversion component and the compensated component. At least a first process between the conversion calculation process and the compensation calculation process includes a characteristic changing process of changing a characteristic in the first process based on a characteristic of a second process between the conversion calculation process and the compensation calculation process so as to secure control stability of the vehicle steering system.

According to this disclosure, a decrease in the control stability can be mitigated.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view showing the configuration of a vehicle steering system according to a first embodiment;
FIG. 2 is a block diagram showing functions of a steering control device of FIG. 1;
FIG. 3 is a block diagram showing a function of calculating an angular axial force in the steering control device of FIG. 1;
FIG. 4 is a block diagram showing functions of a steered angle ratio variable control unit of FIG. 2;
FIG. 5 is a block diagram showing functions of a steered angle ratio variable control unit according to a second embodiment;
FIG. 6 is a block diagram showing functions of a steered angle ratio variable control unit according to a third embodiment;
FIG. 7 is a block diagram showing functions of a steered angle ratio variable control unit according to a fourth embodiment; and
FIG. 8 is a block diagram showing functions of a steered angle ratio variable control unit according to a fifth embodiment.

### DETAILED DESCRIPTION OF EMBODIMENTS

### FIRST EMBODIMENT

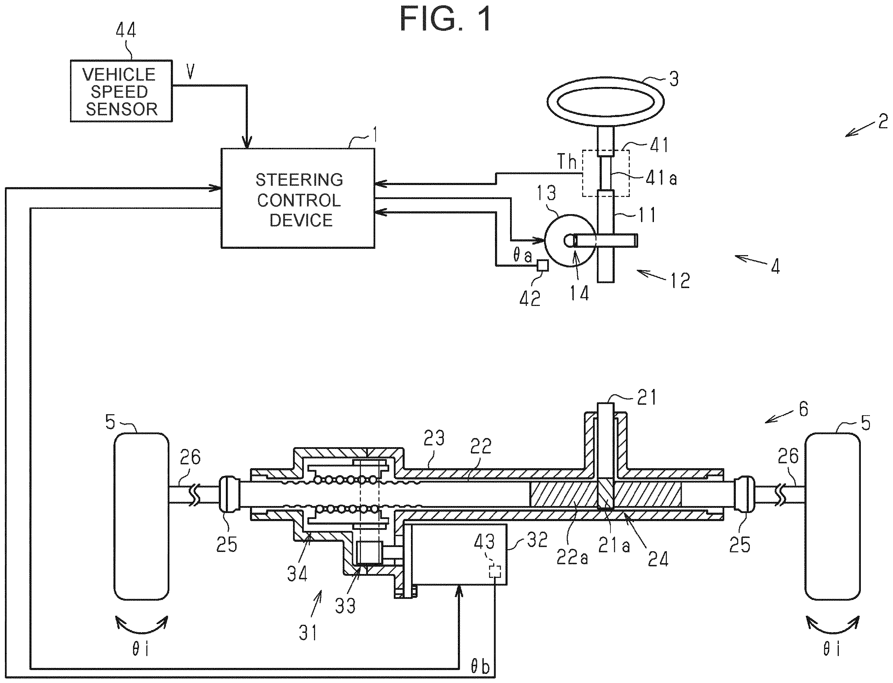

A first embodiment of this disclosure will be described below. As shown in FIG. 1, a vehicle steering system 2 includes a steering control device 1. The vehicle steering system 2 includes a steering unit 4 and a turning unit 6. The steering unit 4 is steered by a driver through a steering wheel 3 of a vehicle that is a steering member. The turning unit 6 operates so as to turn left and right turning wheels 5 of the vehicle according to steering that is input into the steering unit 4 by the driver. The vehicle steering system 2 of this embodiment has, for example, a structure in which a power transmission path between the steering unit 4 and the turning unit 6 is mechanically always cut off. In this structure, a power transmission path between a steering actuator 12, to be described later, and a turning actuator 31, to be described later, is mechanically always cut off. Thus, the vehicle steering system 2 includes a steer-by-wire steering device.

The steering unit 4 includes a steering shaft 11 and the steering actuator 12. The steering shaft 11 is coupled to the steering wheel 3. The steering actuator 12 has a steering-side motor 13 and a steering-side speed reduction mechanism 14. The steering-side motor 13 is a reaction force motor that applies a steering reaction force that is a force acting against steering to the steering wheel 3 through the steering shaft 11. The steering-side motor 13 is coupled to the steering shaft 11 through the steering-side speed reduction mechanism 14 that is formed by, for example, a worm-and-wheel. As the steering-side motor 13 of this embodiment, for example, a three-phase brushless motor is adopted.

The turning unit 6 includes a pinion shaft 21, a rack shaft 22 as a turning shaft, and a rack housing 23. The pinion shaft 21 and the rack shaft 22 are coupled together at a predetermined intersection angle. Pinion teeth 21a formed in the pinion shaft 21 and rack teeth 22a formed in the rack shaft 22 are meshed with each other to form a rack-and-pinion mechanism 24. The pinion shaft 21 corresponds to a rotating shaft that allows conversion into a turning angle θi representing a turning position of the turning wheels 5. The rack housing 23 houses the rack-and-pinion mechanism 24.

One end of the pinion shaft 21 on the opposite side from the side coupled to the rack shaft 22 protrudes from the rack housing 23. Both ends of the rack shaft 22 protrude from both ends in an axial direction of the rack housing 23. At both ends of the rack shaft 22, tie rods 26 are coupled through rack ends 25 that are formed by ball joints. Leading ends of the tie rods 26 are coupled to knuckles (not shown) on which the left and right turning wheels 5 are respectively mounted.

The turning unit 6 includes the turning actuator 31. The turning actuator 31 includes a turning-side motor 32, a transmission mechanism 33, and a conversion mechanism 34. The turning-side motor 32 applies a turning force for turning the turning wheels 5 to the rack shaft 22 through the transmission mechanism 33 and the conversion mechanism 34. The turning-side motor 32 transmits rotation to the conversion mechanism 34 through the transmission mechanism 33 that is formed by, for example, a belt transmission mechanism. The transmission mechanism 33 converts the rotation of the turning-side motor 32 into reciprocating motion of the rack shaft 22 through the conversion mechanism 34 that is formed by, for example, a ball screw mechanism. As the turning-side motor 32 of the embodiment, for example, a three-phase brushless motor is adopted.

In the vehicle steering system 2, the turning angle θi of the turning wheels 5 is changed as a motor torque is applied as the turning force from the turning actuator 31 to the rack shaft 22 according to the driver's steering operation. Meanwhile, a steering reaction force acting against the driver's steering is applied from the steering actuator 12 to the steering wheel 3. Thus, in the vehicle steering system 2, a steering torque Th required to steer the steering wheel 3 is changed by the steering reaction force that is a motor torque applied from the steering actuator 12.

The reason for providing the pinion shaft 21 is to support the rack shaft 22 along with the pinion shaft 21 inside the rack housing 23. By a support mechanism (not shown) provided in the vehicle steering system 2, the rack shaft 22 is supported so as to be movable along an axial direction thereof and at the same time pressed toward the pinion shaft 21. Thus, the rack shaft 22 is supported inside the rack housing 23. However, another support mechanism may be provided that supports the rack shaft 22 in the rack housing 23 without using the pinion shaft 21.

### ELECTRICAL CONFIGURATION OF VEHICLE STEERING SYSTEM

As shown in FIG. 1, the steering-side motor 13 and the turning-side motor 32 are connected to the steering control device 1. The steering control device 1 controls the operation of each of the motors 13, 32.

Detection results of various sensors are input into the steering control device 1. Examples of the various sensors include a torque sensor 41, a steering-side rotation angle sensor 42, a turning-side rotation angle sensor 43, and a vehicle speed sensor 44.

The torque sensor 41 is provided in the steering shaft 11, at a portion between the steering wheel 3 and the steering-side speed reduction mechanism 14. The torque sensor 41 detects the steering torque Th that is a value indicating a torque applied to the steering shaft 11 by the driver's steering operation. The steering torque Th is detected in association with twisting of a torsion bar 41a that is an intermediate part of the steering shaft 11 and is provided in the steering shaft 11, between the steering wheel 3 and the steering-side speed reduction mechanism 14. The steering-side rotation angle sensor 42 is provided in the steering-side motor 13. The steering-side rotation angle sensor 42 detects a rotation angle θa that is an angle of a rotating shaft of the steering-side motor 13 within a range of 360 degrees. The turning-side rotation angle sensor 43 is provided in the turning-side motor 32. The turning-side rotation angle sensor 43 detects a rotation angle θb that is an angle of a rotating shaft of the turning-side motor 32 within a range of 360 degrees. The vehicle speed sensor 44 detects a vehicle speed V that is a traveling speed of the vehicle.

### FUNCTIONS OF STEERING CONTROL DEVICE

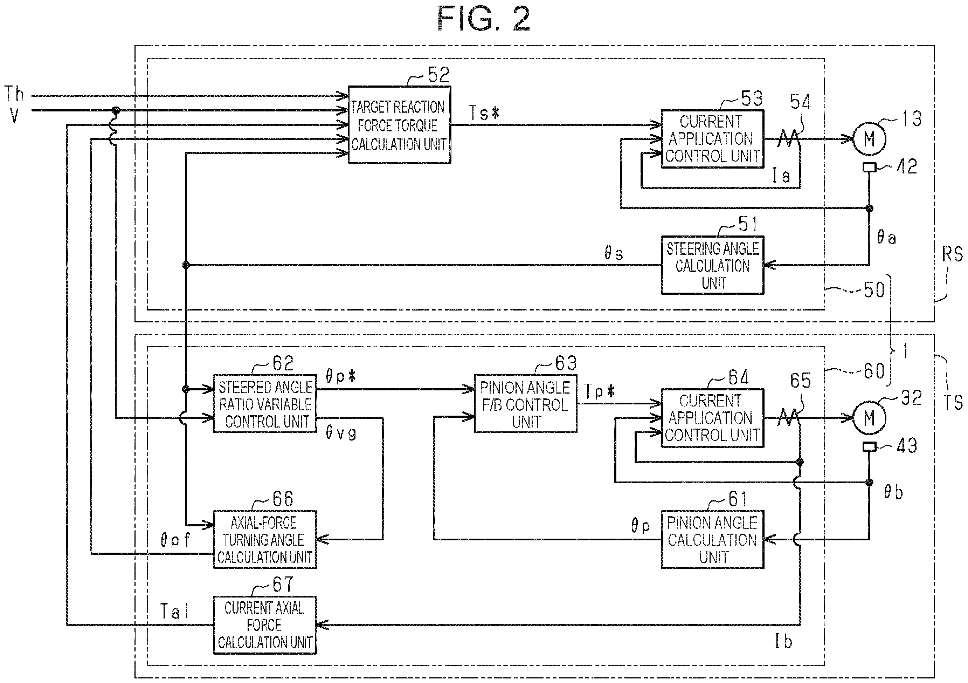

As shown in FIG. 2, the steering control device 1 has a reaction force control unit 50 and a turning control unit 60. The reaction force control unit 50 executes a control process for controlling the steering wheel 3 that is a control target. The reaction force control unit 50 controls the driving of the steering actuator 12, more particularly the steering-side motor 13, to control the steering reaction force that is a control amount of the control target. The turning control unit 60 executes a control process for controlling the rack shaft 22 that is a control target. The turning control unit 60 controls the driving of the turning actuator 31, more particularly the turning-side motor 32, to control the turning force that is a control amount of the control target. The reaction force control unit 50 and the turning control unit 60 transmit and receive information to and from each other through a local network, such as a serial communication network. The reaction force control unit 50 is combined with the steering unit 4 to form a reaction force system RS. The turning control unit 60 is combined with the turning unit 6 to form a turning system TS. In this embodiment, the turning control unit 60 is one example of the control unit.

The reaction force control unit 50 includes a central processing unit (hereinafter referred to as a "CPU") and a memory. The reaction force control unit 50 executes various processes as the CPU executes programs stored in the memory on a predetermined calculation cycle. The turning control unit 60 includes a central processing unit (hereinafter referred to as a "CPU") and a memory. The turning control unit 60 executes various processes as the CPU executes programs stored in the memory on a predetermined calculation cycle. The CPU and the memory constitute a microcomputer that is a processing circuit. The memory includes computer-readable media, such as a random-access memory (RAM) and a read-only memory (ROM). However, that various processes are realized by software is one example. The processing circuits that the reaction force control unit 50 and the turning control unit 60 have may be configured to realize at least some of the processes by a hardware circuit, such as a logic circuit.

FIG. 2 shows some of the processes executed by the reaction force control unit 50 and the turning control unit 60. The processes shown in FIG. 2 are some of the processes that are realized as the CPUs execute the programs stored in the memories, and are depicted by the type of process to be realized.

The reaction force control unit 50 has a current sensor 54. The current sensor 54 detects an actual current value Ia that is obtained from a value of a current in each phase of the steering-side motor 13 that flows through a connection line between the reaction force control unit 50 and a motor coil in each phase of the steering-side motor 13. The current sensor 54 acquires, as a current, a voltage drop of a shunt resistor that is connected to a source side of each of switching elements in an inverter (not shown) that is provided so as to correspond to the steering-side motor 13. In FIG. 2, for the convenience of description, the connection lines for the respective phases and the current sensors for the respective phases are collectively shown as one connection line and one current sensor.

The turning control unit 60 has a current sensor 65. The current sensor 65 detects an actual current value Ib that is obtained from a value of a current in each phase of the turning-side motor 32 that flows through a connection line between the turning control unit 60 and a motor coil in each phase of the turning-side motor 32. The current sensor 65 acquires, as a current, a voltage drop of a shunt resistor that is connected to a source side of each of switching elements in an inverter (not shown) that is provided so as to correspond to the turning-side motor 32. In FIG. 2, for the convenience of description, the connection lines for the respective phases and the current sensors for the respective phases are collectively shown as one connection line and one current sensor.

### REACTION FORCE CONTROL UNIT

As shown in FIG. 2, the reaction force control unit 50 controls power supply to the steering-side motor 13 by receiving an input of the steering torque Th, the vehicle speed V, the rotation angle θa, an axial-force turning angle θpf, and a current axial force Tai. The axial-force turning angle θpf and the current axial force Tai are components that are calculated in the turning control unit 60.

The reaction force control unit 50 has a steering angle calculation unit 51, a target reaction force torque calculation unit 52, and a current application control unit 53. The steering angle calculation unit 51 calculates the steering angle θs by receiving an input of the rotation angle θa. The steering angle calculation unit 51 converts the rotation angle θa into an integrated angle including a range exceeding 360° by, for example, counting the number of rotations of the steering-side motor 13 from a steering neutral position that is a rotation position of the steering wheel 3 when the vehicle is moving straight forward. The steering angle calculation unit 51 calculates the steering angle θs by multiplying the integrated angle obtained by the conversion by a conversion factor based on a rotation speed ratio of the steering-side speed reduction mechanism 14. The steering angle θs thus obtained is used for calculations in the target reaction force torque calculation unit 52. The steering angle θs is output to the turning control unit 60.

The target reaction force torque calculation unit 52 calculates a target reaction force torque command value Ts* by receiving an input of the steering torque Th, the vehicle speed V, the axial-force turning angle θpf, the current axial force Tai, and the steering angle θs. The target reaction force torque command value Ts* is a reaction force control amount serving as a target of the steering reaction force of the steering wheel 3 that should be generated through the steering-side motor 13. The target reaction force torque command value Ts* thus obtained is used for control in the current application control unit 53.

The current application control unit 53 calculates a current command value Ia* by receiving an input of the target reaction force torque command value Ts*. The current command value Ia* is a target value of a torque to be generated by the steering-side motor 13. The current application control unit 53 calculates a converted current value Iae by receiving an input of the actual current value Ia and the rotation angle θa. The converted current value Iae is a converted value obtained by converting the actual current value Ia into a current value in a dq-coordinate system. The current application control unit 53 controls the power supply to the steering-side motor 13 by executing feedback control on the converted current value Iae so as to adapt the converted current value Iae to the current command value Ia*. As a result, the steering-side motor 13 generates a torque according to the target reaction force torque command value Ts*. Thus, it is possible to give the driver appropriate steering feedback according to a reaction force from a road surface.

### TURNING CONTROL UNIT

As shown in FIG. 2, the turning control unit 60 controls power supply to the turning-side motor 32 by receiving an input of the vehicle speed V, the rotation angle θb, and the steering angle θs. The steering angle θs is a component that is calculated in the reaction force control unit 50.

The turning control unit 60 has a pinion angle calculation unit 61, a steered angle ratio variable control unit 62, a pinion angle feedback control unit (in FIG. 2, "PINION ANGLE F/B CONTROL UNIT") 63, a current application control unit 64, an axial-force turning angle calculation unit 66, and a current axial force calculation unit 67.

The pinion angle calculation unit 61 calculates the pinion angle θp by receiving an input of the rotation angle θb. The pinion angle calculation unit 61 converts the rotation angle θb into an integrated angle including a range exceeding 360° by, for example, counting the number of rotations of the turning-side motor 32 from a rack neutral position that is a position of the rack shaft 22 when the vehicle is moving straight forward. The pinion angle calculation unit 61 calculates the pinion angle θp that is an actual rotation angle of the pinion shaft 21 by multiplying the integrated angle obtained by the conversion by a conversion factor based on a rotation speed ratio of the transmission mechanism 33, a lead of the conversion mechanism 34, and a rotation speed ratio of the rack-and-pinion mechanism 24. The pinion angle θp thus obtained is used for calculations in the pinion angle feedback control unit 63.

The steered angle ratio variable control unit 62 executes a target turning angle calculation process of calculating a target pinion angle θp* by receiving an input of the vehicle speed V and the steering angle θs. The target pinion angle θp* is a turning control amount serving as a target of the pinion angle θp obtained as a result of turning the turning wheels 5. The target pinion angle θp* thus obtained is used for calculations in the pinion angle feedback control unit 63.

The pinion angle feedback control unit 63 calculates a turning force command value Tp* by receiving an input of the target pinion angle θp* and the pinion angle θp. The turning force command value Tp* is a turning control amount serving as a target of the turning force of the turning wheels 5 that should be generated through the turning-side motor 32. The pinion angle feedback control unit 63 calculates the turning force command value Tp* by executing feedback control on the pinion angle θp to adapt the pinion angle θp to the target pinion angle θp*. The turning force command value Tp* thus obtained is used for control in the current application control unit 64.

The current application control unit 64 calculates a current command value Ib* by receiving an input of the turning force command value Tp*. The current command value Ib* is a target value of a torque to be generated by the turning-side motor 32. The current application control unit 64 calculates a converted current value The by receiving an input of the actual current value Ib and the rotation angle θb. The converted current value The is a converted value obtained by converting the actual current value Ib into a current value on a dq-coordinate system. The current application control unit 64 controls the power supply to the turning-side motor 32 by executing feedback control on the converted current value The to adapt the converted current value The to the current command value Ib*. As a result, the turning-side motor 32 generates a torque according to the turning force command value Tp*. Thus, it is possible to rotate the turning wheels 5 by an angle according to the turning force.

The axial-force turning angle calculation unit 66 calculates the axial-force turning angle θpf by receiving an input of the steering angle θs and a conversion component θvg. The conversion component θvg is an intermediate component that is obtained in the course of the steered angle ratio variable control unit 62 calculating the target pinion angle θp*. The axial-force turning angle calculation unit 66 calculates the axial-force turning angle θpf by adding up the steering angle θs and the conversion component θvg. The axial-force turning angle θpf thus obtained is output to the reaction force control unit 50.

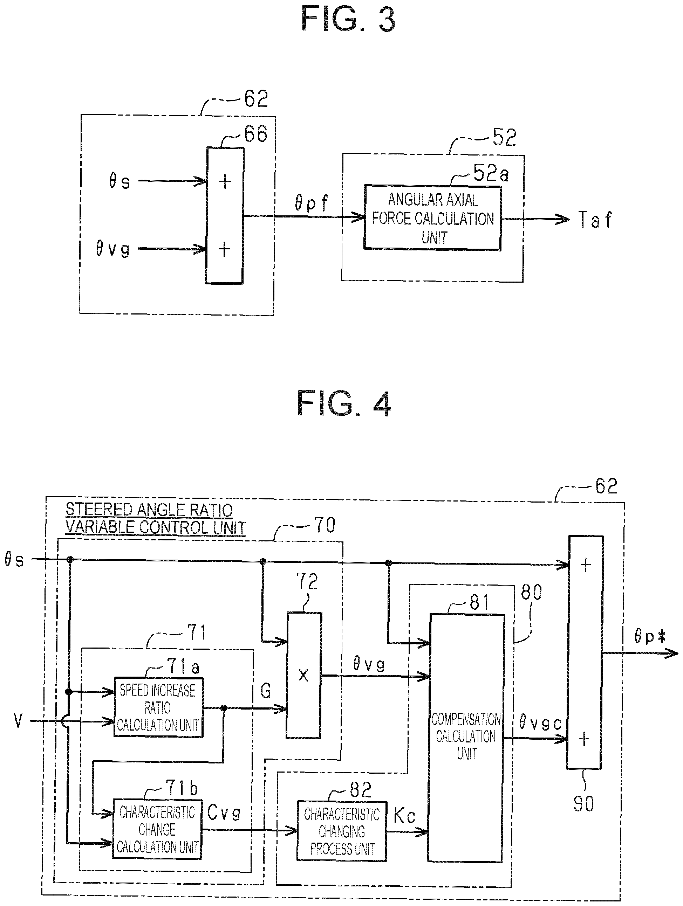

For example, as shown in FIG. 3, the target reaction force torque calculation unit 52 of the reaction force control unit 50 has an angular axial force calculation unit 52a. The angular axial force calculation unit 52a includes a process of calculating an angular axial force Taf by receiving an input of the axial-force turning angle θpf. The angular axial force Taf is an estimated value of an axial force acting on the rack shaft 22 that is specified by an arbitrarily set model of the vehicle etc., and is a component that is reflected on the target reaction force torque command value Ts*.

The current axial force calculation unit 67 calculates the current axial force Tai by receiving an input of the actual current value Ib. The current axial force Tai is an estimated value of an axial force that actually acts on the rack shaft 22 as the turning wheels 5 turn, and is a component that is reflected on the target reaction force torque command value Ts*. The current axial force Tai thus obtained is output to the reaction force control unit 50.

### STEERED ANGLE RATIO VARIABLE CONTROL UNIT

As shown in FIG. 4, the steered angle ratio variable control unit 62 has a static component calculation unit 70, a dynamic component calculation unit 80, and a reflection calculation unit 90.

The static component calculation unit 70 executes a conversion calculation process of calculating the conversion component θvg by receiving an input of the steering angle θs and the vehicle speed V. More specifically, the static component calculation unit 70 has a steered angle variable value calculation unit 71 and a conversion component calculation unit 72.

The steered angle variable value calculation unit 71 includes a process of calculating a speed increase ratio G and a characteristic changing component Cvg by receiving an input of the steering angle θs and the vehicle speed V. More specifically, the steered angle variable value calculation unit 71 has a speed increase ratio calculation unit 71a and a characteristic change calculation unit 71b.

The speed increase ratio calculation unit 71a includes a steered angle variable value calculation process of calculating the speed increase ratio G by receiving an input of the steering angle θs and the vehicle speed V. The speed increase ratio G is a steered angle variable value that is obtained by subtracting "1" from a value indicating a relationship in a case where the steering angle θs is a denominator and the target pinion angle θp* is a numerator. The value indicating the relationship in the case where the steering angle θs is a denominator and the target pinion angle θp* is a numerator serves as an index indicating a ratio of a change amount of the target pinion angle θp* relative to a change amount of the steering angle θs. Such an index is called, for example, a transmission ratio, a steered angle ratio, a gear ratio, etc., and specifies a relationship between the steering angle θs and the pinion angle θp or a relationship between the steering angle θs and the turning angle θi. That is, the speed increase ratio G is a value indicating a difference from a case where the steering angle θs and the target pinion angle θp* correspond at a ratio of 1:1. The speed increase ratio G thus obtained is used for calculations in the characteristic change calculation unit 71b and the conversion component calculation unit 72.

For example, the speed increase ratio G is set such that the value becomes smaller as the steering angle θs becomes larger, and that the value becomes smaller as the vehicle speed V becomes higher. The speed increase ratio G is a positive value including "0." Thus, the index indicating the ratio of the change amount of the target pinion angle θp* relative to the change amount of the steering angle θs is equal to or larger than "1."

The characteristic change calculation unit 71b includes a process of calculating the characteristic changing component Cvg by receiving an input of the steering angle θs and the speed increase ratio G. The characteristic changing component Cvg is a value of a gradient of change obtained with the denominator being a steering angle change value Δθs that is a change amount of the steering angle θs and the numerator being a conversion component change value Δθvg that is a change amount of the conversion component θvg. For example, in the case where the speed increase ratio G is calculated based on a map using the steering angle θs as an input, such a gradient of change may be a value obtained as a gradient between points before and after a change in the map, i.e., with the denominator being the steering angle change value Δθs and the numerator being a speed increase ratio change value ΔG that is a change amount of the speed increase ratio G. The characteristic changing component Cvg thus obtained is used for calculations in the dynamic component calculation unit 80.

The conversion component calculation unit 72 includes a process of calculating the conversion component θvg by receiving an input of the steering angle θs and the speed increase ratio G. The conversion component calculation unit 72 is a multiplier, and calculates the conversion component θvg by multiplying the steering angle θs by the speed increase ratio G. The conversion component θvg is a change amount for increasing the steering angle θs by reflecting the speed increase ratio G. That is, the conversion component θvg is a static component that reflects a steady characteristic among behavioral characteristics of the vehicle as a result of reflecting the speed increase ratio G.

For example, as a result of converting the steering angle θs into the conversion component θvg, the conversion component calculation unit 72 has a characteristic specified by the characteristic changing component Cvg that is obtained based on the speed increase ratio G so as to change a steady characteristic among the behavioral characteristics of the vehicle. In this embodiment, the characteristic changing component Cvg is one example of the conversion characteristic.

The dynamic component calculation unit 80 executes a process of calculating a compensated component θvgc by receiving an input of the steering angle θs and the conversion component θvg. Further, the dynamic component calculation unit 80 executes a characteristic changing process of changing the characteristic of the compensation calculation process by receiving an input of the characteristic changing component Cvg. More specifically, the dynamic component calculation unit 80 has a compensation calculation unit 81 and a characteristic changing process unit 82.

The compensation calculation unit 81 includes a process of calculating the compensated component θvgc by receiving an input of the conversion component θvg. The compensated component θvgc is obtained by compensating for a dynamic component that reflects a response characteristic among the behavioral characteristics of the vehicle and that has an influence as a result of the conversion calculation process being performed on the steering angle θs. The compensation calculation unit 81 is, for example, a phase-lag filter having a zero-order/first-order, i.e., first-order lag transfer function, and calculates the compensated component θvgc by performing phase compensation on the conversion component θvg. The compensated component θvgc thus obtained is used for calculations in the reflection calculation unit 90.

For example, the phase-lag filter is a low-pass filter, and has a characteristic that is specified by a transfer function having a predetermined cut-off frequency so as to adjust a response characteristic among the behavioral characteristics of the vehicle, and that has an influence as a result of the conversion calculation process being performed on the steering angle θs. The cut-off frequency corresponds to a filter constant K that is set when implementing a discrete control system as the compensation calculation unit 81. For example, the filter constant K is set such that the value becomes smaller as a steering angle speed ωs obtained by differentiating the steering angle θs becomes higher. In this embodiment, the filter constant K is one example of the compensation characteristic.

The characteristic changing process unit 82 includes a process of calculating a characteristic changing value Kc by receiving an input of the characteristic changing component Cvg. The characteristic changing value Kc is a component for changing the filter constant K. The characteristic changing value Kc thus obtained is used for calculations in the compensation calculation unit 81. For example, the compensation calculation unit 81 uses, in phase compensation, the filter constant K after reflecting the characteristic changing value Kc that is obtained by adding or subtracting the characteristic changing value Kc to or from the filter constant K. The characteristic changing value Kc in this case is an adjustment operation value for performing adjustment so as to change the filter constant K.

For example, the characteristic changing value Kc is a value that changes according to the characteristic changing component Cvg, and has a characteristic of changing the filter constant K so as to mitigate deterioration of control stability of the vehicle steering system 2. For example, the characteristic changing value Kc is set such that the value becomes smaller as the characteristic changing component Cvg becomes larger.

The reflection calculation unit 90 executes a component reflection process of calculating the target pinion angle θp* by receiving an input of the steering angle θs and the compensated component θvgc. The reflection calculation unit 90 is an adder, and calculates the target pinion angle θp* by adding the compensated component θvgc to the steering angle θs.

### WORKINGS OF THE EMBODIMENT

For example, in the case where the filter constant K is not changed based on the characteristic changing component Cvg, a range is restricted in which the control stability of the vehicle steering system 2 can be secured by phase compensation in the compensation calculation unit 81 in response to a change in the speed increase ratio G.

On the other hand, the characteristic changing process unit 82 in the dynamic component calculation unit 80 executes the process of changing the filter constant K of the compensation calculation unit 81 according to a characteristic based on the speed increase ratio G, i.e., the characteristic changing component Cvg. In the case where the filter constant K is thus changed according to the characteristic changing component Cvg, the range in which the control stability of the vehicle steering system 2 can be secured by phase compensation in the compensation calculation unit 81 changes in response to a change in the speed increase ratio G. That is, in the case where the conversion component θvg obtained by converting the steering angle θs is further subjected to phase compensation, the filter constant K in the compensation calculation unit 81 is changed so as to mitigate a decrease in the control stability of the vehicle steering system 2.

### ADVANTAGES OF THE EMBODIMENT

(1-1) Changing the filter constant K according to the characteristic changing component Cvg can link the speed increase ratio G and the filter constant K to each other in the conversion component calculation unit 72 and the compensation calculation unit 81 from the viewpoint of securing the control stability of the vehicle steering system 2. Thus, also in the case where the relationship between the steering angle θs and the target pinion angle θp* is changed, the control stability of the vehicle steering system 2 can be secured. Therefore, a decrease in the control stability can be mitigated.

(1-2) Of the static component calculation unit 70 and the dynamic component calculation unit 80, the dynamic component calculation unit 80 includes the characteristic changing process unit 82. Thus, a decrease in the control stability can be mitigated by simply including the characteristic changing process unit 82 in the dynamic component calculation unit 80.

(1-3) The static component calculation unit 70 executes the process of converting the steering angle θs into the conversion component θvg using the speed increase ratio G. The speed increase ratio G changes according to the steering angle θs and the vehicle speed V. The dynamic component calculation unit 80 executes the phase-lag filtering process of executing phase-lag compensation on the conversion component θvg. Thus, also in the case where the speed increase ratio G changes according to the steering angle θs and the vehicle speed V, the control stability of the vehicle steering system 2 can be secured regardless of these steering angle θs and vehicle speed V.

(1-4) The static component calculation unit 70 executes the process of calculating the speed increase ratio G using the steering angle θs as an input. The characteristic changing component Cvg is the conversion component change value Δθvg relative to the steering angle change value ΔΘs. The characteristic changing component Cvg may be the speed increase ratio change value ΔG relative to the steering angle change value ΔΘs. Thus, adjustment of the gradient of change obtained in association with the speed increase ratio G becomes possible. This is effective for securing the control stability of the vehicle steering system.

### SECOND EMBODIMENT

A second embodiment will be described below with reference to the drawings, with a focus on differences from the first embodiment. For the convenience of description, the same components as in the first embodiment will be denoted by the same reference signs as in the first embodiment and description thereof will be omitted.

### STEERED ANGLE RATIO VARIABLE CONTROL UNIT

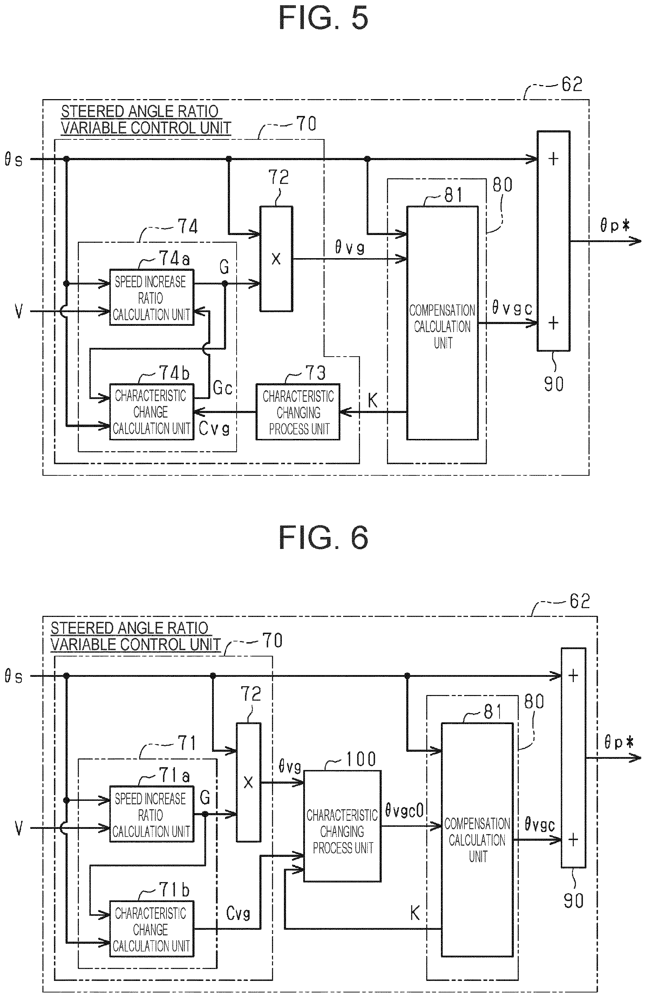

As shown in FIG. 5, in the steered angle ratio variable control unit 62 of this embodiment, the contents of the processes executed by the static component calculation unit 70 and the dynamic component calculation unit 80 are different.

More specifically, the static component calculation unit 70 has a characteristic changing process unit 73 in addition to having a steered angle variable value calculation unit 74 that is a component corresponding to the steered angle variable value calculation unit 71 described in the above first embodiment and the conversion component calculation unit 72. The dynamic component calculation unit 80 has the compensation calculation unit 81 while not having the characteristic changing process unit 82. Thus, the filter constant K in this embodiment is set so as to change based on the steering angle speed ωs obtained by differentiating the steering angle θs and, in addition, for example, not to change based on the characteristic changing value Kc described in the above first embodiment. The filter constant K of the compensation calculation unit 81 is used for calculations in the characteristic changing process unit 73.

The characteristic changing process unit 73 of the static component calculation unit 70 includes a process of calculating the characteristic changing component Cvg by receiving an input of the filter constant K. The characteristic changing component Cvg thus obtained is used for calculations in a characteristic change calculation unit 74b.

The characteristic change calculation unit 74b is a component corresponding to the characteristic change calculation unit 71b described in the above first embodiment, and includes a process of calculating an adjusted speed increase ratio Gc by receiving an input of the steering angle θs and the characteristic changing component Cvg. The adjusted speed increase ratio Gc is a value of the speed increase ratio G for obtaining the conversion component change value Δθvg that should meet the characteristic changing component Cvg relative to the steering angle change value ΔΘs. For example, in the case where the speed increase ratio G is calculated based on a map using the steering angle θs as an input, such an adjusted speed increase ratio Gc may be a value of the speed increase ratio G for obtaining the speed increase ratio change value ΔG that should meet the characteristic changing component Cvg relative to the steering angle change value ΔΘs. The adjusted speed increase ratio Gc thus obtained is used for calculations in a speed increase ratio calculation unit 74a.

The speed increase ratio calculation unit 74a is a component corresponding to the speed increase ratio calculation unit 71a described in the above first embodiment, and includes a process of calculating the adjusted speed increase ratio Gc as the speed increase ratio G. The process of calculating such a speed increase ratio G may be, for example, a process of obtaining the speed increase ratio G by adding, subtracting, or multiplying the adjusted speed increase ratio Gc. The speed increase ratio G thus obtained is used for calculations in the conversion component calculation unit 72. The characteristic changing component Cvg, i.e., the adjusted speed increase ratio Gc in this case is an adjustment operation value for performing adjustment so as to change the speed increase ratio G.

For example, the characteristic changing component Cvg is a value that changes according to the filter constant K, and has a characteristic of changing the speed increase ratio G so as to mitigate deterioration of the control stability of the vehicle steering system 2. For example, the characteristic changing component Cvg is set such that the value becomes smaller as the filter constant K becomes smaller.

### WORKINGS OF THE EMBODIMENT

For example, in the case where the speed increase ratio G is not changed based on the filter constant K, as a result of a change in the filter constant K, the speed increase ratio G falls out of a range in which the control stability of the vehicle steering system 2 can be secured by phase compensation in the compensation calculation unit 81.

On the other hand, the characteristic changing process unit 73 in the static component calculation unit 70 executes the process of changing the speed increase ratio G of the steered angle variable value calculation unit 74 based on the filter constant K. In the case where the speed increase ratio G is thus changed based on the filter constant K, the speed increase ratio G changes so as to remain in the range in which the control stability of the vehicle steering system 2 can be secured by phase compensation in the compensation calculation unit 81 in response to a change in the filter constant K. Thus, in the case where the conversion component θvg obtained by converting the steering angle θs is further subjected to phase compensation, the speed increase ratio G in the steered angle variable value calculation unit 74 is changed so as to mitigate a decrease in the control stability of the vehicle steering system 2.

### ADVANTAGES OF THE EMBODIMENT

Other than advantages equivalent to the advantages (1-1) and (1-4) of the above-described first embodiment, this embodiment having been described above can produce the following advantages.

(2-1) Of the static component calculation unit 70 and the dynamic component calculation unit 80, the static component calculation unit 70 includes the characteristic changing process unit 73. Thus, a decrease in the control stability can be mitigated by simply including the characteristic changing process unit 73 in the static component calculation unit 70.

(2-2) The dynamic component calculation unit 80 executes the phase-lag filtering process of executing phase-lag compensation on the conversion component θvg. The filter constant K changes according to the steering angle θs. The static component calculation unit 70 executes the process of converting the steering angle θs into the conversion component θvg using the speed increase ratio G. Thus, also in the case where the filter constant K changes according to the steering angle θs, the control stability of the vehicle steering system 2 can be secured regardless of this steering angle θs.

### THIRD EMBODIMENT

A third embodiment will be described below with reference to the drawings, with a focus on differences from the first embodiment. For the convenience of description, the same components as in the first embodiment will be denoted by the same reference signs as in the first embodiment and description thereof will be omitted.

### STEERED ANGLE RATIO VARIABLE CONTROL UNIT

As shown in FIG. 6, in the steered angle ratio variable control unit 62 of this embodiment, the contents of the processes executed by the static component calculation unit 70 and the dynamic component calculation unit 80 are different.

More specifically, the steered angle ratio variable control unit 62 has a characteristic changing process unit 100 in addition to having the static component calculation unit 70 and the dynamic component calculation unit 80. The dynamic component calculation unit 80 has the compensation calculation unit 81 while not having the characteristic changing process unit 82. Thus, the filter constant K in this embodiment is set so as to change based on the steering angle speed ωs obtained by differentiating the steering angle θs and, in addition, for example, not to change based on the characteristic changing value Kc described in the above first embodiment. The filter constant K of the compensation calculation unit 81 is used for calculations in the characteristic changing process unit 100.

The characteristic changing process unit 100 includes a process of calculating an adjusted conversion component θvgc0 by receiving an input of the conversion component θvg, the characteristic changing component Cvg, and the filter constant K. The adjusted conversion component θvgc0 is a value that changes according to the conversion component θvg, the characteristic changing component Cvg, and the filter constant K, and has a characteristic of changing the conversion component θvg so as to mitigate deterioration of the control stability of the vehicle steering system 2. For example, the adjusted conversion component θvgc0 is set such that the value becomes smaller as the characteristic changing component Cvg becomes larger or as the filter constant K becomes smaller. The adjusted conversion component θvgc0 thus obtained is used for calculations in the compensation calculation unit 81. The adjusted conversion component θvgc0 in this case is an adjustment operation value for performing adjustment so as to change the conversion component θvg. Thus changing the conversion component θvg is equivalent to performing adjustment so as to change the filter constant K or to performing adjustment so as to change the characteristic changing component Cvg, i.e., the speed increase ratio G.

### WORKINGS OF THE EMBODIMENT

For example, in the case where the conversion component θvg is not adjusted, the range is restricted in which the control stability of the vehicle steering system 2 can be secured by phase compensation in the compensation calculation unit 81 in response to a change in the speed increase ratio G. In this case, as a result of a change in the characteristic changing component Cvg and the filter constant K in response to a change in the speed increase ratio G, the speed increase ratio G falls out of the range in which the control stability of the vehicle steering system 2 can be secured by phase compensation in the compensation calculation unit 81.

On the other hand, the characteristic changing process unit 100 executes the process of changing the conversion component θvg based on the characteristic changing component Cvg and the filter constant K. In the case where the conversion component θvg is thus changed, the conversion component θvg changes so as to remain in the range in which the control stability of the vehicle steering system 2 can be secured by phase compensation in the compensation calculation unit 81 in response to a change in the speed increase ratio G. Thus, in the case where the conversion component θvg obtained by converting the steering angle θs is further subjected to phase compensation, the conversion component θvg that is the target of this phase compensation is changed so as to mitigate a decrease in the control stability of the vehicle steering system 2.

### ADVANTAGES OF THE EMBODIMENT

Other than advantages equivalent to the advantages (1-1) and (1-4) of the above-described first embodiment, this embodiment having been described above can produce the following advantages.

(3-1) The steered angle ratio variable control unit 62 includes the characteristic changing process unit 100 in addition to having the static component calculation unit 70 and the dynamic component calculation unit 80. Thus, a decrease in the control stability can be mitigated by simply including the characteristic changing process unit 100 in the steered angle ratio variable control unit 62 separately from the static component calculation unit 70 and the dynamic component calculation unit 80.

(3-2) The static component calculation unit 70 executes the process of converting the steering angle θs into the conversion component θvg using the speed increase ratio G. The dynamic component calculation unit 80 executes the phase-lag filtering process of executing phase-lag compensation on the conversion component θvg. The conversion component θvg is influenced by a change in the speed increase ratio G and the filter constant K. Thus, also in the case where the conversion component θvg is influenced by a change in the speed increase ratio G and the filter constant K, the control stability of the vehicle steering system 2 can be secured regardless of a change in these speed increase ratio G and filter constant K.

### FOURTH EMBODIMENT

A fourth embodiment will be described below with reference to the drawings, with a focus on differences from the first embodiment. For the convenience of description, the same components as in the first embodiment will be denoted by the same reference signs as in the first embodiment and description thereof will be omitted.

### STEERED ANGLE RATIO VARIABLE CONTROL UNIT

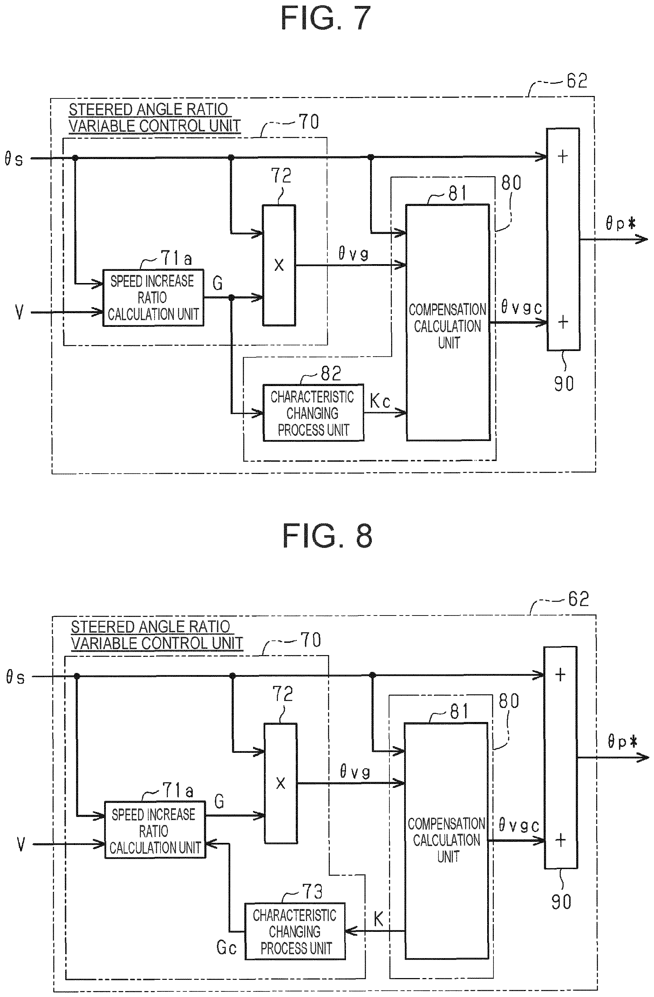

As shown in FIG. 7, in the steered angle ratio variable control unit 62 of this embodiment, the contents of the processes executed by the static component calculation unit 70 and the dynamic component calculation unit 80 are different.

More specifically, the static component calculation unit 70 has the speed increase ratio calculation unit 71a while not having the characteristic change calculation unit 71b. The characteristic changing process unit 82 of the dynamic component calculation unit 80 includes a process of calculating the characteristic changing value Kc by receiving an input of the speed increase ratio G.

For example, the characteristic changing value Kc is a value that changes according to the speed increase ratio G, and has a characteristic of changing the filter constant K so as to mitigate deterioration of the control stability of the vehicle steering system 2. For example, the characteristic changing value Kc is set such that the value becomes smaller as the speed increase ratio G becomes higher. The characteristic of changing the filter constant K may be such that the filter constant K changes according to a change in the speed increase ratio G, i.e., the speed increase ratio change value ΔG. In this case, the process of calculating the speed increase ratio change value ΔG should be included in the process of either the speed increase ratio calculation unit 71a or the characteristic changing process unit 82.

This embodiment having been described above can produce workings equivalent to those of the above-described first embodiment, as well as advantages equivalent to the advantages (1-1) and (1-4) of the above-described first embodiment.

### FIFTH EMBODIMENT

A fifth embodiment will be described below with reference to the drawings, with a focus on differences from the second embodiment. For the convenience of description, the same components as in the second embodiment will be denoted by the same reference signs as in the second embodiment and description thereof will be omitted.

### STEERED ANGLE RATIO VARIABLE CONTROL UNIT

As shown in FIG. 8, in the steered angle ratio variable control unit 62 of this embodiment, the contents of the processes executed by the static component calculation unit 70 are different.

More specifically, the static component calculation unit 70 has the speed increase ratio calculation unit 74a and the characteristic changing process unit 73 while not having the characteristic change calculation unit 74b. The characteristic changing process unit 73 includes a process of calculating the adjusted speed increase ratio Gc by receiving an input of the filter constant K. The adjusted speed increase ratio Gc thus obtained is used for calculations in the speed increase ratio calculation unit 74a.

For example, the adjusted speed increase ratio Gc is a value that changes according to the filter constant K, and has a characteristic of changing the speed increase ratio G so as to mitigate deterioration of the control stability of the vehicle steering system 2. For example, the adjusted speed increase ratio Gc is set such that the value becomes smaller as the filter constant K becomes smaller. Changing the speed increase ratio G can be specified so as to change how the speed increase ratio G changes, i.e., the speed increase ratio change value ΔG. In this case, the process of performing calculations involved in changing the speed increase ratio change value ΔG should be included in the process of either the speed increase ratio calculation unit 74a or the characteristic changing process unit 73.

This embodiment having been described above can produce workings equivalent to those of the above-described second embodiment, as well as advantages equivalent to the advantages (1-1) and (1-4) of the above-described first embodiment and advantages equivalent to the advantages (2-1) and (2-2) of the above-described second embodiment.

### OTHER EMBODIMENTS

Each of the above-described embodiments may be changed as follows. The following other embodiments can be combined with one another within such a range that no technical contradiction arises.

In the first embodiment, when calculating the characteristic changing value Kc, the characteristic changing process unit 82 may receive an input of the steering angle θs and the vehicle speed V, i.e., parameters that are used to calculate the speed increase ratio G. In addition, the characteristic changing process unit 82 may use the conversion component θvg. The other embodiment described here can be applied to the fourth embodiment as well.

In the first embodiment, it does not matter whether the form of change of the characteristic changing value Kc is linear or non-linear. The other embodiment described here can be applied to the fourth embodiment as well.

In the first embodiment, at a minimum, the characteristic changing value Kc should be set so as to be able to mitigate a decrease in the control stability of the vehicle steering system 2 according to the characteristics of the stability. For example, depending on the characteristics of the control stability of the vehicle steering system 2, the characteristic changing value Kc may be set such that the value becomes larger as the speed increase ratio G becomes higher. The other embodiment described here can be applied to the fourth embodiment as well.

In the first embodiment, the compensation calculation unit 81 may use, in phase compensation, the filter constant K after reflecting the characteristic changing value Kc that is obtained by multiplying the filter constant K by the characteristic changing value Kc. The other embodiment described here can be applied to the fourth embodiment as well.

In the first embodiment, the filter constant K may be set so as to change according to only the characteristic changing value Kc. The other embodiment described here can be applied to the fourth embodiment as well.

While having the characteristic changing process unit 82, the first embodiment may further have the characteristic changing process unit 73 as with the second embodiment. That is, the static component calculation unit 70 and the dynamic component calculation unit 80 may include the characteristic changing process units 73, 82 for changing the characteristic in each of the units based on the characteristic of the process of the other unit so as to secure the control stability of the vehicle steering system 2. The other embodiment described here can be applied to the fourth embodiment as well.

In the second embodiment, at a minimum, the adjusted speed increase ratio Gc should be set so as to be able to mitigate a decrease in the control stability of the vehicle steering system 2 according to the characteristics of the stability. For example, depending on the characteristics of the control stability of the vehicle steering system 2, the adjusted speed increase ratio Gc may be set such that the value becomes larger as the filter constant K becomes smaller. The other embodiment described here can be applied to the fifth embodiment as well.

In each of the embodiments, the speed increase ratio calculation unit 71a may calculate, as the speed increase ratio G, an index that indicates a ratio of the change amount of the target pinion angle θp* relative to the change amount of the steering angle θs. That is, the speed increase ratio G is a value equal to or larger than "1." In the other embodiment described here, the compensated component θvgc calculated by the dynamic component calculation unit 80 is used as the target pinion angle θp*. In this case, the dynamic component calculation unit 80 executes a process corresponding to the reflection calculation unit 90, and therefore the reflection calculation unit 90 can be omitted.

In each of the embodiments, at a minimum, the steered angle variable value calculation units 71, 74 should be able to reflect a state change of at least either the vehicle steering system 2 or the vehicle on the speed increase ratio G. For example, when calculating the speed increase ratio G, the steered angle variable value calculation units 71, 74 may use only either the steering angle θs or the vehicle speed V, or may use other elements in combination. Examples of other elements include the steering angle speed ωs, and a turning angle speed ωt that is obtained from a differentiated value of the pinion angle θp or the target pinion angle θp*.

In each of the embodiments, the speed increase ratio G can be arbitrarily changed, like, for example, setting the speed increase ratio G so as to change linearly when the value becomes smaller as the steering angle θs becomes larger, or setting the speed increase ratio G such that the value becomes larger as the steering angle θs becomes larger. In addition, the speed increase ratio G may be a negative value.

In each of the embodiments, at a minimum, the compensation calculation unit 81 should be able to reflect the state change of at least either the vehicle steering system 2 or the vehicle on phase compensation, i.e., the filter constant K. For example, when performing phase compensation, the compensation calculation unit 81 may use the filter constant K according to the vehicle speed V, or may use both the steering angle speed ωs and the vehicle speed V, or may use other elements in combination. Examples of other elements include the aforementioned turning angle speed ωt.

In each of the embodiments, the filter constant K may be set such that, for example, the value becomes larger as the steering angle speed ωs becomes higher.

In each of the embodiments, as the compensation calculation unit 81, for example, a low-pass filter having a higher-order transfer function, such as a second-order lag transfer function, may be adopted as long as the low-pass filter is a phase-lag filter. The compensation calculation unit 81 may be, for example, a phase-lead filter as long as it is finally made proper within the steered angle ratio variable control unit 62.

In each of the embodiments, the current axial force calculation unit 67 may be a function of the reaction force control unit 50, i.e., the target reaction force torque calculation unit 52. In this case, at a minimum, the target reaction force torque calculation unit 52 should include a process of calculating the current axial force Tai by receiving an input of the actual current value Ib.

In each of the embodiments, the axial-force turning angle calculation unit 66 may be a function of the reaction force control unit 50, i.e., the target reaction force torque calculation unit 52. In this case, at a minimum, the target reaction force torque calculation unit 52, i.e., the angular axial force calculation unit 52a should include a process of calculating the axial-force turning angle θpf by receiving an input of the steering angle θs and the conversion component θvg.

In each of the embodiments, at least some of the functions of the steered angle ratio variable control unit 62 may be functions of the reaction force control unit 50.

In each of the embodiments, when calculating the target reaction force torque command value Ts*, the target reaction force torque calculation unit 52 need not use either the vehicle speed V or the steering torque Th, or may use other elements in combination.

In each of the embodiments, the target reaction force torque calculation unit 52 may calculate, as the target reaction force torque command value Ts*, a value calculated through execution of torque feedback control that adapts the steering torque Th to a target steering torque calculated based on the steering torque Th.

In each of the embodiments, the steering angle calculation unit 51 may calculate the steering angle θs by factoring in an amount of twisting of the steering shaft 11 according to the steering torque Th.

In each of the embodiments, the steering angle θs may be a detection value of a steering angle sensor that directly detects a rotation angle of the steering shaft 11. The steering angle sensor may be provided, for example, in the steering shaft 11, between the steering wheel 3 and the torque sensor 41.

In each of the embodiments, it is not essential for the steering actuator 12 to include the steering-side speed reduction mechanism 14.

In each of the embodiments, the steering-side motor 13 is not limited to a three-phase brushless motor. For example, the steering-side motor 13 may be a brushed direct-current motor. The other embodiment described here can be applied to the turning-side motor 32 as well.

In each of the embodiments, the pinion angle θp may be obtained by converting a detection value of an amount of movement of the rack shaft 22. In this case, the control amount relating to the pinion angle θp, etc. are converted by the detection value of the amount of movement of the rack shaft 22.

In each of the embodiments, the operation member that the driver operates to steer the vehicle is not limited to the steering wheel 3. For example, the operation member may be a joystick. In each of the embodiments, the turning unit 6 transmits the rotation of the turning-side motor 32 to the conversion mechanism 34 through the transmission mechanism 33. However, without being limited thereto, the turning unit 6 may be configured, for example, so as to transmit the rotation of the turning-side motor 32 to the conversion mechanism 34 through a gear mechanism. Or the turning unit 6 may be configured such that the turning-side motor 32 directly rotates the conversion mechanism 34. Further, the turning unit 6 may be configured to include a second rack-and-pinion mechanism, and the turning unit 6 may be configured such that the rotation of the turning-side motor 32 is converted into reciprocating motion of the rack shaft 22 in the second rack-and-pinion mechanism.

In each of the embodiments, the configuration of the turning unit 6 is not limited to the configuration in which the right turning wheel 5 and the left turning wheel 5 operate in conjunction with each other. In other words, the configuration may be such that the right turning wheel 5 and the left turning wheel 5 are independently controllable.

In each of the embodiments, the vehicle steering system 2 has a link-less structure in which the steering unit 4 and the turning unit 6 are mechanically always cut off from each other. However, without being limited thereto, the vehicle steering system 2 may have, for example, a structure in which the steering unit 4 and the turning unit 6 can be mechanically cut off from each other by a clutch.

In each of the embodiments, as the turning-side motor 32, for example, a motor that is disposed on the same axis as the rack shaft 22, or a motor that is connected through a worm-and-wheel to the pinion shaft that forms the rack-and-pinion mechanism with the rack shaft 22 may be adopted.

## Claims

1. A steering control device (1) for a vehicle steering system (2) having a power transmission path cut off between a steering unit (4) that is steered by a steering wheel (3) of a vehicle and a turning unit (6) that operates to turn a turning wheel (5) of the vehicle,
the steering control device (1) comprising a processor (60) configured to control operation of the turning unit (6), **characterized in that**:
the processor (60) is configured to execute a target turning angle calculation process of, based on a steering angle representing a rotation position of the steering wheel (3), calculating a target turning angle that is a target of a turning angle representing a turning position of the turning wheel (5) and is a control amount for operating the turning unit (6);
the target turning angle calculation process includes:
a conversion calculation process of, to change a relationship between the steering angle and the turning angle, receiving an input of the steering angle and with that calculating a conversion component that is obtained by converting the steering angle;
a compensation calculation process of, to adjust an influence on behavior of the vehicle, receiving an input of the conversion component and with that calculating a compensated component that is obtained by performing phase compensation on the conversion component; and
a component reflection process of calculating the target turning angle so as to reflect the compensated component;
the conversion calculation process includes calculating the conversion component according to a conversion characteristic that specifies a relationship between the steering angle and the conversion component;
the compensation calculation process includes calculating the compensated component according to a compensation characteristic that specifies a relationship between the conversion component and the compensated component; and
at least a first process between the conversion calculation process and the compensation calculation process includes a characteristic changing process of changing a characteristic in the first process based on a characteristic of a second process between the conversion calculation process and the compensation calculation process so as to secure control stability of the vehicle steering system (2).

2. The steering control device (1) according to claim 1, **characterized in that**:
of the conversion calculation process and the compensation calculation process, the compensation calculation process includes the characteristic changing process; and
the characteristic changing process in the compensation calculation process changes the compensation characteristic based on the conversion characteristic.

3. The steering control device (1) according to claim 2, **characterized in that**:
the conversion calculation process converts the steering angle into the conversion component using a steered angle variable value that indicates a ratio of a change amount of the turning angle relative to a change amount of the steering angle;
the conversion characteristic is based on the steered angle variable value according to a state change of at least either the vehicle or the vehicle steering system (2);
the compensation calculation process is a phase-lag filtering process of executing phase-lag compensation on the conversion component; and
the compensation characteristic indicates a constant of a transfer function that is a characteristic of the phase-lag filtering process.

4. The steering control device (1) according to claim 1, **characterized in that**:
of the conversion calculation process and the compensation calculation process, the conversion calculation process includes the characteristic changing process; and
the characteristic changing process in the conversion calculation process changes the conversion characteristic based on the compensation characteristic.

5. The steering control device (1) according to claim 4, **characterized in that**:
the compensation calculation process is a phase-lag filtering process of executing phase-lag compensation on the conversion component;
the compensation characteristic indicates a constant of a transfer function that is a characteristic of the phase-lag filtering process according to a state change of at least either the vehicle or the vehicle steering system (2);
the conversion calculation process converts the steering angle into the conversion component using a steered angle variable value that indicates a ratio of a change amount of the turning angle relative to a change amount of the steering angle; and
the conversion characteristic is based on the steered angle variable value.

6. The steering control device (1) according to claim 3 or claim 5, **characterized in that**:
the conversion calculation process includes a steered angle variable value calculation process of calculating the steered angle variable value using the steering angle as an input; and
a characteristic based on the steered angle variable value is a change amount of the conversion component or a change amount of the steered angle variable value relative to a change amount of the steering angle that is input into the steered angle variable value calculation process.

7. A steering control method for a vehicle steering system (2) having a power transmission path cut off between a steering unit (4) that is steered by a steering wheel (3) of a vehicle and a turning unit (6) that operates to turn a turning wheel (5) of the vehicle,
the steering control method comprising executing a control process of controlling operation of the turning unit (6), **characterized in that**:
the control process includes a target turning angle calculation process of, based on a steering angle representing a rotation position of the steering wheel (3), calculating a target turning angle that is a target of a turning angle representing a turning position of the turning wheel (5) and is a control amount for operating the turning unit (6);
the target turning angle calculation process includes:
a conversion calculation process of, to change a relationship between the steering angle and the turning angle, receiving an input of the steering angle and with that calculating a conversion component that is obtained by converting the steering angle;
a compensation calculation process of, to adjust an influence on behavior of the vehicle, receiving an input of the conversion component and with that calculating a compensated component that is obtained by performing phase compensation on the conversion component; and
a component reflection process of calculating the target turning angle so as to reflect the compensated component;
the conversion calculation process includes calculating the conversion component according to a conversion characteristic that specifies a relationship between the steering angle and the conversion component;
the compensation calculation process includes calculating the compensated component according to a compensation characteristic that specifies a relationship between the conversion component and the compensated component; and
at least a first process between the conversion calculation process and the compensation calculation process includes a characteristic changing process of changing a characteristic in the first process based on a characteristic of a second process between the conversion calculation process and the compensation calculation process so as to secure control stability of the vehicle steering system (2).
